Europäisches Patentamt

(19) European Patent Office

Office européen des brevets

(11) Publication number: **0 202 212**
**B1**

(12) **EUROPEAN PATENT SPECIFICATION**

(45) Date of publication of patent specification: **04.01.89**

(51) Int. Cl.⁴: **H 02 K 1/28**

(21) Application number: **86850167.7**

(22) Date of filing: **13.05.86**

(54) Key joint.

(30) Priority: **14.05.85 SE 8502391**

(43) Date of publication of application:
**20.11.86 Bulletin 86/47**

(45) Publication of the grant of the patent:
**04.01.89 Bulletin 89/01**

(84) Designated Contracting States:
**DE FR GB IT**

(56) References cited:
**DE-A-3 022 397**
**US-A-2 304 067**
**US-A-4 110 652**

(73) Proprietor: **Flygt AB**
**Box 1309**
**S-171 25 Solna (SE)**

(72) Inventor: **Stahl, Torvald**
**Hörningsholmsvägen 3**
**S-125 35 Älvsjö (SE)**

(74) Representative: **Larsson, Sten**
**Flygt AB Box 1309**
**S-171 25 Solna (SE)**

Courier Press, Leamington Spa, England.

## Description

The invention concerns a key joint for a rotary proof attaching of an electric rotor to a shaft.

A squirrel-cage motor is provided with short-circuit bars arounds its periphery. In order to obtain an even operation of the motor, said bars are preferably somewhat inclined with regard to the shaft direction, meaning that neither the longitudinal grooves in the core discs are parallel with the shaft direction. The inclination then depends on the number of grooves in the stator circuit, which in its turn depends on the number of poles, the effect and the voltage.

The inclination of the grooves means that the key joint necessary for obtaining a rotary proof fastening of a big rotor to the shaft, also must be inclined with regard to the shaft direction. This brings about certain problems. It may be difficult to obtain the necessary depth of the key way towards its ends and in addition the great number of variants means that a lot of shafts having varying inclinations of the key ways must be manufactured and kept in stock.

An alternative for a key way in the shaft could be to attach a key by help of a fixture to the shaft whereafter the key and the shaft together are provided with bores for rivets. Even this solution has the disadvantage that a great number of different units "shaft with key" must be kept in stock.

In order to secure a short delivery time when using the known embodiments, about ten different shaft units must be kept in store which of course is very expensive.

According to the invention the key joint is designed with a key of the type stated in the subsequent claims.

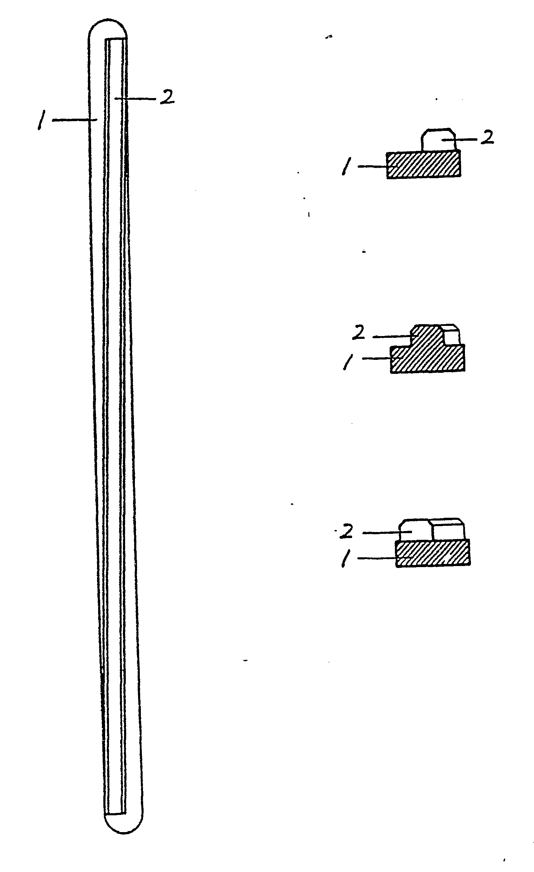

The invention is described more closely below with reference to the enclosed drawing.

According to the invention the joint includes a conventional key way extending in parallel with the direction of the shaft and thus has the same design for all variants. The key that cooperates with the key way consists of two integrated parts 1 and 2. The first part has the same width as the key way and its height corresponds with the depth of said key way. The second part 2 is narrower than the first part 1 and arranged diagonally on the latter. The second part 2 will thus cooperate with a key way in the core discs and secure the rotor in a non-rotary proof way on the shaft. The inclination of the second part 2 with relation to the first part 1 is so chosen that the intended inclination is obtained.

The great advantage in the joint according to the invention is that a shaft of a standard design always can be used and only a number of different keys must be kept in stock. This means a non expensive manufacturing as the price of a key is only some percent of the price of a shaft.

## Claim

A key joint to be used for a rotary proof fastening of an electric rotor to a shaft, characterized in, that the key (1, 2) consists of two, preferably integral parts, the first (1) meant to be mounted in a key way on the shaft in parallel with the shaft direction and having a height essentially corresponding with the depth of the key way and a narrower part (2) situated radially outside the first part and having a direction which is inclined with regard to the first part so that the second part extends diagonally over the first part.

## Patentanspruch

Keilverbindung zur Verwendung für eine rotationsfeste Befestigung eines elektrischen Rotors auf einer Welle, dadurch gekennzeichnet, daß der Keil (1, 2) aus zwei, vorzugsweise integralen Teilen besteht, wobei der erste Teil (1) für die Montage in einer Keilnut in der Welle parallel zu der Erstreckungsrichtung der Welle gedacht ist und eine der Tiefe der Keilnut im wesentlichen entsprechende Höhe aufweist, und wobei sich ein schmalerer Teil (2) radial außerhalb von dem ersten Teil befindet und eine Erstreckungsrichtung aufweist, die relativ zu dem ersten Teil schräg verläuft, so daß sich der zweite Teil diagonal über den ersten Teil erstreckt.

## Revendication

Clavetage destiné à être utilisé pour une fixation résistant à la rotation d'un moteur électrique sur un arbre, caractérisé en ce que la clavette (1, 2) est constituée de deux parties, de préférence venues de matière, la première partie (1) étant prévue pour être montée dans une rainure de clavetage sur l'arbre parallèlement à la direction de l'arbre et ayant une hauteur correspondant à peu près à la profondeur de la rainure de clavetage et une partie plus étroite (2) située à l'extérieur radialement de la première partie et ayant une direction qui est inclinée par rapport à la première partie de façon à ce que la seconde partie s'étende diagonalement au-dessus de la première partie.